# EUROPEAN PATENT SPECIFICATION

(11) **EP 3 506 675 B1**
(45) Date of publication and mention of the grant of the patent: **23.02.2022**
(21) Application number: 17845402.1
(22) Date of filing: 29.08.2017
(51) Int. Cl.: H04W 36/00, H04W 36/32

(54) **METHOD AND APPARATUS FOR UPDATING NETWORK SIDE POSITION AREA**
VERFAHREN UND VORRICHTUNG ZUR AKTUALISIERUNG EINES NETZWERKSEITIGEN POSITIONSBEREICHS
PROCÉDÉ ET APPAREIL DE MISE À JOUR D'UNE ZONE DE POSITION CÔTÉ RÉSEAU

(30) Priority: 29.08.2016 CN 201610752839
(43) Date of publication of application: 03.07.2019
(73) Proprietor: ZTE Corporation, Shenzhen, Guangdong 518057 (CN)
(72) Inventor: GAO, Yin, Shenzhen Guangdong 518057 (CN); HUANG, He, Shenzhen Guangdong 518057 (CN)
(74) Representative: Aipex B.V.
(86) International application number: PCT/CN2017/099515
(87) International publication number: WO 2018/041100

(56) References cited:
- WO-A1-2009/089777
- WO-A1-2011/134171
- CN-A- 1 925 669
- CN-A- 1 925 669
- CN-A- 101 610 554
- CN-A- 102 215 532
- CN-A- 102 638 785
- NOKIA ET AL: "Direct Tunnel functionality", 3GPP DRAFT; SA3LI07_003 PART 2 CR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. New Orleans, USA; 20061218, 18 December 2006 (2006-12-18), XP050281990, [retrieved on 2006-12-18]
- QUALCOMM INCORPORATED: "NR RRC inactive state principles", 3GPP DRAFT; N9_R3-161939 NR RRC INACTIVE STATE PRINCIPLES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Gothenburg, Sweden; 20160822 - 20160826 21 August 2016 (2016-08-21), XP051127405, Retrieved from the Internet: URL:http://www.3gpp.org/ftp/Meetings_3GPP_ SYNC/RAN3/Docs/ [retrieved on 2016-08-21]

## Description

### TECHNICAL FIELD

The present application relates to, but is not limited to, mobile communication technologies and, in particular, relates to methods, apparatuses and computer-readable storage mediums for updating a network side position area.

### BACKGROUND

In the long term evolution (LTE) system, for low-cost and low-throughput type terminal devices, a research topic of the NarrowBand-Internet of Things (NB-IoT) is proposed, that is, a low-throughput wireless communication service is provided for NB-IoT low-cost user equipment (UE) in a frequency band of 200 kHz. With the continuous evolution of wireless communication technologies and protocol standards, the mobile packet service has been developed tremendously, and the data throughput capability of a single UE has been continuously improved.

In order to meet energy-saving requirements of the user and reduce the signaling interaction between the core network (CN) and the radio access network (RAN), an inactive mode in the control of the RAN is introduced. The RAN side triggers the UE to enter this mode. The UE may move in this mode without data transmission and may process paging messages. When downlink data arrives at the base station or when the UE has uplink data to be transmitted, the UE may be triggered to initiate an air interface resume process and is switched to the connected state. The CN is unaware of the inactive state, in the control of the RAN, of the UE.

In the above-mentioned NB IOT technology, if the UE performs a cross-base station resume process and the cross-base station user text information cannot be obtained when the X2 interface does not exist, the resume process cannot be completed. At the same time, in the NB-IoT technology, the user is merely in the connected state or the idle state and the core network is aware of a change of the user state, so there is not a case where data arrives at the source base station after the user is the suspend state. The 5G system is different. The user has an inactive state in the control of the network side and the core network is unaware of a change of the user state. For the user in the 5G system, a user energy loss is caused when the position area update is frequently triggered in the following two cases: a position change caused by a movement of the user in the inactive state causes the network side to be unable to perceive the mobile position of the user; or, the user moves within a small range, such as a cell range. Further relevant technologies are also known from CN 1 925 669 A (HUAWEI TECH CO LTD [CN]) 7 March 2007 (2007-03-07), which relates to a method for updating the location of user equipment, and NOKIA ET AL: "Direct Tunnel functionality", 3GPP DRAFT; SA3LI07_003 PART 2 CR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. New Orleans, USA; 20061218, 18 December 2006 (2006-12-18), XP050281990, [retrieved on 2006-12-18], which relates to direct tunnel functionality.

### SUMMARY

The following is a summary of the subject matter described herein in detail. This summary is not intended to limit the scope of the claims. The feature of the method and apparatus according to the present invention are defined in the independent claims. Further improvements are provided in the dependent claims.

Embodiments of the present invention provide a method and apparatus for updating a network side position area, which can implement an update of the network side position area information in the process of obtaining UE context information and improve the network efficiency.

The embodiments of the present invention may achieve network side position area information obtaining of the UE across RAN nodes in the scenario where the UE is moving across the RAN nodes, and achieve forwarding of cache data on the RAN node, to avoid UE resume failure and a defect of cache data forwarding failure due to movement or the UE, and the energy of the UE is saved. In addition, UE text information can be migrated to a new mobility management anchor node to improve network efficiency.

Other aspects can be understood after the drawings and detailed description are read and understood.

### BRIEF DESCRIPTION OF DRAWINGS

FIG. 1 is an architecture diagram of a distributed network;
FIG. 2 is an architecture diagram of a centralized network;
FIG. 3 is a schematic diagram of a scenario in which a RAN side position area update occurs in a same anchor node in the distributed network architecture;
FIG. 4 is a schematic diagram of a scenario in which the RAN side position area update occurs in different anchor nodes in the distributed network architecture;
FIG. 5 is a schematic diagram of a scenario in which the RAN side position area update occurs in a same anchor node in the centralized network architecture;
FIG. 6 is a schematic diagram of a scenario in which the RAN side position area update occurs in different anchor nodes in the centralized network architecture;
FIG. 7 is a flowchart 1 of a method for updating a network side position area according to an embodiment of the present invention;
FIG. 8 is a flowchart 2 of a method for updating a network side position area according to an embodiment of the present invention;
FIG. 9 is a structural diagram 1 of an apparatus for updating a network side position area according to an embodiment of the present invention;
FIG. 10 is a structural diagram 1 of a first processing unit according to an embodiment of the present invention;
FIG. 11 is a structural diagram 2 of a first processing unit according to an embodiment of the present invention;
FIG. 12 is a structural diagram 2 of an apparatus for updating a network side position area according to an embodiment of the present invention;
FIG. 13 is a structural diagram 3 of an apparatus for updating a network side position area according to an embodiment of the present invention;
FIG. 14 is a flowchart of a method in a scenario 1 according to an embodiment of the present invention;
FIG. 15 is a flowchart of a method in a scenario 2 according to an embodiment of the present invention;
FIG. 16 is a flowchart of a method in a scenario 3 according to an embodiment of the present invention;
FIG. 17 is a flowchart of a method in a scenario 4 according to an embodiment of the present invention; and
FIG. 18 is a flowchart of a method in a scenario 5 according to an embodiment of the present invention.

### DETAILED DESCRIPTION

Embodiments of the present invention will be described below in detail in conjunction with the drawings.

The steps illustrated in the flowcharts of the drawings may be executed by, for example, a set of computer-executable instructions in a computer system. Moreover, although the flowcharts illustrate a logical order of execution, the steps illustrated or described may, in some cases, be executed in an order different from that herein.

For NarrowBand-Cellular Internet of Things (NB-CIOT), a user may configure a dedicated core network. An operator may manage these special-purpose user equipment in the dedicated core network so as to distinguish them from ordinary users to minimize the impact on ordinary users. At the same time, the NB-IoT introduces different uplink narrowband access capabilities and optimized data transmission solutions for characteristics of the UE: low cost and small data amounts for transmission. The optimized data transmission solution includes optimization solutions based on user plane and control plane transmission. For smartphone users, the optimization solutions based on user plane and control plane transmission may also be extended.

In the optimization solution based on user plane transmission, similar to the LTE process, data is transmitted through a data radio bearer (DRB), and signaling is still transmitted through an signaling radio bearer (SRB)1/SRB2. The current standard has clearly described that merely one DRB is configured for the NB-IOT user. Smart terminal users that support the user plane solution may support multiple bearers. The network side introduces suspend and resume processes. The base station and the mobility management entity (MME) store user text information in the suspend process and may rapidly activate a UE text in the resume process, and the suspend and resume of S1 interfaces are all initiated by the base station. After the air interface suspend process is completed, the UE is switched to the idle state. When the UE needs to transmit data or "signaling + data" in the idle state, the UE may directly use the resume mechanism without performing the process of air interface encryption, access stratum (AS) bearer establishment and the like. The user text information includes the user identifier (ID) information, ID information related to the S1 interface user, information related to the user security, the bearer information, information related to the service quality, and user historical information. The user historical information includes the historical information of the user in the connected state, and the historical information of the user which is reported by the UE and recently resided in the connected state and the idle state. When the user moves to the target base station in the suspend state, and when the target base station initiates the resume process, the target base station may obtain UE text information from the source base station that stores the UE text information through the X2 interface or the S1 interface. After the air interface resume process is completed, the UE is switched to the connected state. The RAN and the core network are aware of a state transition of the UE.

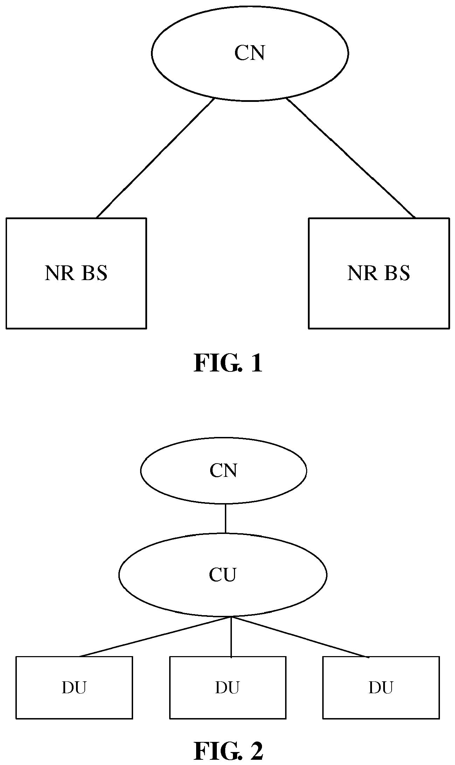

Meanwhile, with the continuous evolution of wireless communication technologies and protocol standards, the mobile packet traffic has been developed tremendously, and the data throughput capability of a single UE has been continuously improved. In the long term evolution (LTE) system, as an example, data transmission at a maximum downlink rate of 100 Mbps may be supported in a bandwidth of 20Mhz. In the subsequent enhanced LTE system and the subsequent 5G system, the data transmission rate will be further increased, even up to tens of Gbps. The 5G technology features: seamless wide-area coverage, large-capacity hotspots, large number of connections with low power consumption, high reliability with low latency, and the like. One goal of the design for the next-generation radio access network (RAN) at the release 14 of the 3rd Generation Partnership Project (3GPP) is to use a single technology architecture to support multiple types of traffics, such as enhanced mobile broadband (eMBB), massive machine type communications (mMTC), and ultra reliable and low latency communications (URLLC), and the like. In order to achieve the above goal, the design of the user plane architecture in the 5G new radio (NR) needs to be flexible enough. In recent years, deployment of the centralized, cooperative, cloud & clean - radio access network (C-RAN) of the baseband unit (BBU) and the radio remote unit (RRU) has been more and more widely used in many countries and regions around the world. In order to shield the underlying diversified access technology and support the traffic-oriented access, the 5G access network has a two-level network function architecture with the wireless center unit (CU) and the wireless distributed unit (DU) included, similar to the architecture of BBU+RRU in LTE. If the CU and the DU are deployed in the same network device, a distributed network architecture is provided, as shown in FIG. 1. If the CU and the DU are deployed in different network devices, a centralized network architecture is provided, as shown in FIG. 2. The CU satisfies the user-centered design concept, assumes the centralized control and management functions of the wireless network, and may serve as a traffic anchor for the UE. The DU is a remote access unit and includes a radio frequency function and a partial processing function. The interface between the CU and the DU may be called fronthaul, and the position division of the fronthaul (that is, the position at which the division is performed on the user plane) is currently being standardized. For simple description, the interface between the 5G RAN and the 5G CN is referred to as the NG1 interface, and the interface between 5G RANs is referred to as the NG2 interface.

It is considered that the RAN node in the 5G NR may be distributed or centralized. The distributed architecture represents that the RAN node is a base station. The centralized architecture represents that the RAN nodes is CU-DU separated, and a CU or a certain 5G base station (BS) may be used as the anchor node for RAN mobility management.

User position management of a two-layer structure may be considered in 5G NR. The RAN manages the RAN-level position area, and when the user moves out of the area, the UE is triggered to perform position area update, and the RAN side controls whether to update the RAN-level paging area (the RAN-level paging area may be formed by one or more RAN-level position areas) of the UE, or change the mobility management anchor node of the user (UE).

The routing area update (RAU) process in the embodiments of the present invention is the RAN side position area update. The RAN side position area update may occur in the same anchor node (RAN node) or in different anchor nodes (RAN nodes). A RAN position area is formed by one or more cells. Multiple cells may configure with the same RAN position area (RA for short), and one cell can only belong to one RA.

The RAU process (RAN side position area update process) is not needed to be triggered when the UE moves under one RA, and is triggered when the UE moves across RAs.

The scenario in which the RAN side position area is updated is simply described below.

### Distributed RAN node

### 1) The RAU occurs in the same anchor node.

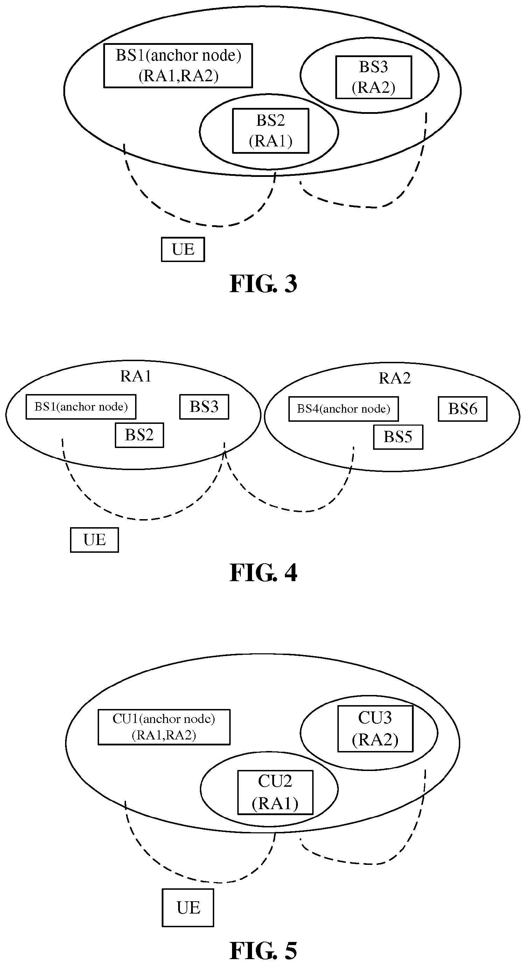

Here, it is assumed that the base station at which the UE is switched from the connected state to the inactive state is the anchor node, as shown in FIG. 3. The dotted line is the moving trajectory of the UE in the inactive state.

The UE initially resides in an RA1, switches to the inactive state at a BS1, and moves to a BS2. The RAU is not triggered. The RAU is triggered when the UE moves from the BS2 to a BS3, and an air interface initiates an RAU update process. The BS3 needs to notify the BS1 that the RA of the UE is changed. The BS1 locally updates the RA information of the UE, and subsequently when the paging message of the MME arrives, the paging may be performed according to the latest RA area.

Here, whether the context information of the UE needs to be migrated when the anchor node is not changed in the RAU process may be considered according to the factors described below.

For example, the user text and path migration may not be performed when no traffic is initiated. For example, the source anchor node determines whether to perform user text migration according to whether the UE is sensitive to the traffic and whether the backhaul of the interface between the base stations is an ideal backhaul.

### 2) The RAU occurs in different anchor nodes.

As shown in FIG. 4, the dotted line is the moving trajectory of the UE in the inactive state.

The UE initially resides in the RA1, switches to the inactive state at the BS1, and moves to the BS3. The RAU is not triggered. The RAU process is triggered when the UE moves from the BS3 to a BS4, and an air interface initiates an RAU update process. The BS4 needs to notify the BS1 that the RA of the UE is changed. The BS1 knows from the locally supported RA list that the UE moves out of the management range of the anchor node BS1, so the BS1 transmits the local UE context information to the BS4. The BS4 needs to communicate with the core network (CN) to notify the CN that the anchor node of the UE is changed. Merely the RAU process is triggered, so the state of the UE in the CN and the RAN may not be changed. Subsequently the paging message of the CN is delivered from the new anchor node.

### 2. Centralized RAN node

The RAU occurs in the same anchor node.

Here, it is assumed that the anchor node in the centralized architecture is a CU node. The CU at which the UE switches from the connected state to the inactive state is the anchor node. As shown in FIG. 5, the dotted line is the moving trajectory of the UE in the inactive state.

The UE initially resides in the RA1, switches to the inactive state at a CU1, and moves to a CU2. The RAU is not triggered. The RAU is triggered when the UE moves from the CU2 to a CU3, and an air interface initiates an RAU update process. The CU3 needs to notify the CU1 that the RA of the UE is changed. The CU1 locally updates the RA information of the UE, and subsequently when the paging message of the MME arrives, the paging may be performed according to the latest RA area.

Whether the context information of the UE needs to be migrated when the anchor node is not changed in the RAU process may be considered according to the factors described below.

For example, the user text and path migration may not be performed when no traffic is initiated. For example, the source anchor node determines whether to perform user text migration according to whether the UE is sensitive to the traffic and whether the backhaul of the interface between the base stations is an ideal backhaul .

Here, the difference from the distributed architecture is that the message interaction is also performed between the CU and the DU in the scenario, as described in the following process.

### 2) The RAU occurs in different anchor nodes.

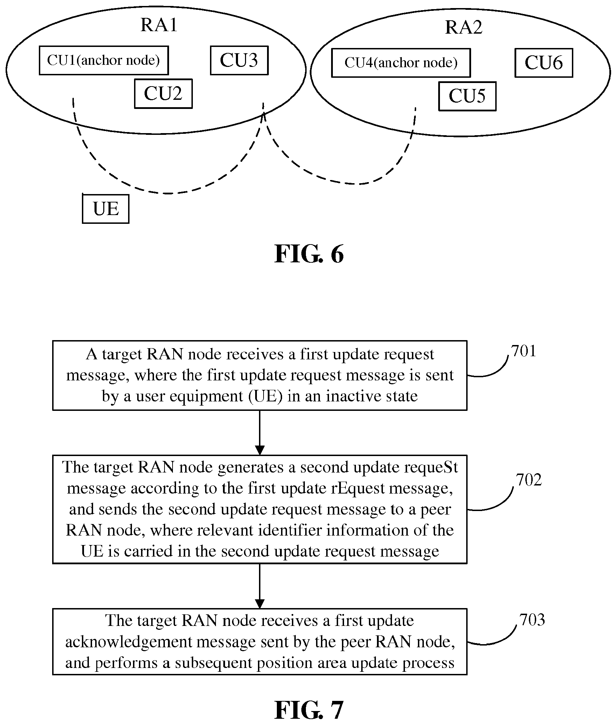

As shown in FIG. 6, the dotted line is the moving trajectory of the UE in the inactive state. In a special scenario of this scenario, each CU manages one RA area, and several DUs are connected to the CU under the RA, which may simplify message interaction between CU interfaces.

The UE initially resides in the RA1, switches to the inactive state at the CU1, and moves to the CU3. The RAU is not triggered. The RAU is triggered when the UE moves from the CU3 to a CU4, and an air interface initiates an RAU update process. The CU4 needs to notify the CU1 that the RA of the UE is changed. The CU1 knows from the locally supported RA list that the UE moves out of the management range of the anchor node CU1, so the CU1 transmits the local UE context information to the CU4. The CU4 needs to communicate with the CN to notify the CN that the anchor node of the UE is changed. Only the RAU is triggered, so the state of the UE in the CN and the RAN may not be changed. Subsequently the paging message of the CN is delivered from the new anchor node.

Here, the difference from the distributed architecture is that the message interaction is also performed between the CU and the DU in the scenario, as described in the following process. The process of updating a network side position area is described below in conjunction with the embodiments.

An embodiment of the present invention provides a method for updating a network side position area. As shown in FIG. 7, the method includes the steps described below.

In a step 701, a target radio access network (RAN) node receives a first update request message. The first update request message is sent by a user equipment (UE) in an inactive state.

In a step 702, the target RAN node generates a second update request message according to the first update request message, and sends the second update request message to a peer RAN node. The second update request message carries identifier information of the UE.

In a step 703, the target RAN node receives a first update acknowledgement message sent by the peer RAN node, and performs a subsequent position area update process.

Here, the target RAN node is a new RAN node to which the UE moves. The mobility management anchor node of the UE may be changed or may not be changed. The peer RAN node is a source RAN node.

In the embodiment of the present disclosure, the first update request message (which is an air interface resume request) includes one or more of:
information of a source RAN position area, such as a routing area identity (RAI);
a UE identifier, such as a system architecture evolution (SAE) temporary mobile subscriber identity (S-TMSI) or a user (UE) text identifier, which may uniquely identify the UE at the source RAN node; and
an update type: a periodic RAU or an event-triggered RAU;
anchor node information of the UE in the source RAN position area, such as an anchor node ID (which may also be information that can obtain the anchor node ID, or may also be parsed from a global cell identifier) and routing information (a tracking area identity, a RAI or a source anchor node may be indexed on the RAN side or the CN side through information related to the user text), where the anchor node of the source RAN position area may be a RAN node in which the UE in the connected state finally resides; and
UE capability information, such as indication of whether the UE supports cross-RAN nodes text obtaining, or capability of supporting different services by the UE.

In the embodiment of the present invention, the identifier information of the UE includes one or more of:
identifier information allocated by the target RAN node to the UE for uniquely identifying the UE at an interface between RAN nodes;
position area information of a cell where the UE currently resides;
a UE identifier, such as an S-TMSI or UE text identifier information, which may uniquely identify the UE (user) text on the source side.

In an embodiment of the present invention, the first update acknowledgement message includes:
identifier information allocated by the source RAN node to the UE for uniquely identifying the UE at an interface between RAN nodes; and
identifier information allocated by the target RAN node to the UE for uniquely identifying the UE at an interface between the RAN nodes.

In another claimed embodiment of the present invention, the first update acknowledgement message includes:
identifier information allocated by the source RAN node to the UE for uniquely identifying the UE at an interface between RAN nodes;
identifier information allocated by the target RAN node to the UE for uniquely identifying the UE at an interface between the RAN nodes; and
UE text information, including UE text information reserved by the UE on the source RAN node. In the embodiment of the present invention, the RAN node may be a base station, or a node formed by two separate units of a wireless central unit (CU) and a wireless distributed unit (DU).

In the claimed embodiment of the present invention, when the RAN node is the node formed by two separate units of a CU and a DU, the step in which the target radio access network (RAN) node receives the first update request message, generates the second update request message according to the first update request message, and sends the second update request message to the peer RAN node includes the steps described below.

A target DU receives the first update request message.

The target DU forwards the first update request message to a target CU.

The target CU generates the second update request message according to the first update request message, and sends the second update request message to a source CU.

In the embodiment of the present invention, the step in which the target RAN node performs the subsequent position area update process includes the steps described below.

The target RAN node delivers the first update acknowledgement message to the UE.

Or the target RAN node delivers the first update acknowledgement message to the UE, saves UE text information locally, updates information of a RAN position area of the UE, and triggers a path switching process of an interface between the target RAN node and a core network (CN). In the embodiment of the present invention, when the RAN node is the node formed by two separate units of a CU and a DU, the step in which the target RAN node receives the first update acknowledgement message sent by the peer RAN node, and performs the subsequent position area update process includes the steps described below.

A target CU delivers the first update acknowledgement message to a target DU, saves UE text information locally, updates information of a RAN position area of the UE, and triggers a path switching process of an interface between the target CU and a CN. The target DU receives the first update acknowledgement message, then allocates a resource to the UE, and delivers the first update acknowledgement message to the UE.

In the embodiment of the present invention, in condition that the UE does not receive the first update acknowledgement message, the first update request message is resent. In condition that the retransmission fails for several times, the idle state is switched to.

In the embodiment of the present invention, after the RAU update process, in condition that the UE has new downlink data to arrive at the source RAN node, the anchor node delivers a paging message (RAN-triggered paging) in the new RA position area. The paging message may be forwarded through an interface between RAN nodes, to improve the success probability of the user paging and reduce the paging range.

In condition that the UE needs to send uplink data, the UE self-triggers the traffic establishment request process and switches to the active state. When the active state is being switched to, the bearer path migration may be considered to be directly performed, to ensure that the subsequent data is sent on the shortest path.

The embodiment of the present invention may achieve network side position area information obtaining of the UE across RAN nodes in the scenario where the UE is moving across the RAN nodes, and achieve forwarding of cache data on the RAN node, to avoid UE resume failure and a defect of cache data forwarding failure due to movement or the UE, and the energy of the UE is saved. In addition, UE text information can be migrated to a new mobility management anchor node to improve network efficiency.

The embodiment of the present invention can satisfy user text information obtaining and data forwarding in the UE text resume process for NB-IoT users in the LTE system, smartphone users that support the user plane solution and users that support the inactive state in the control of the RAN side in the 5G system.

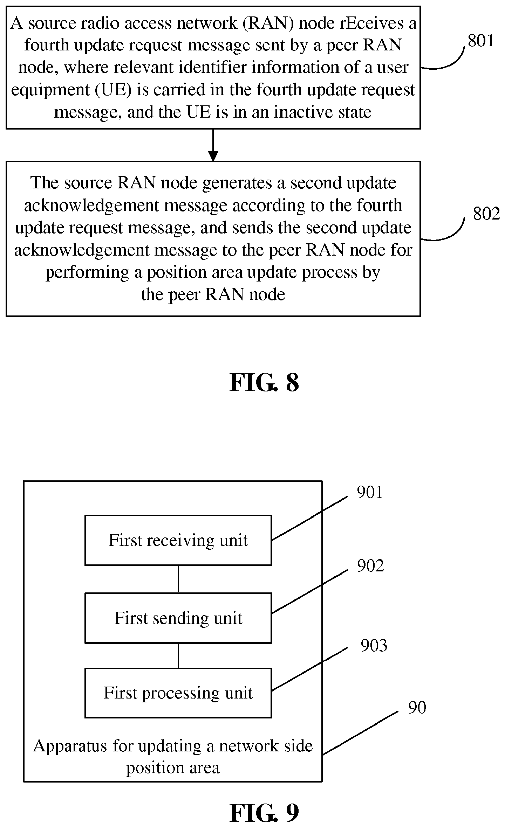

An embodiment of the present invention further provides a method for updating a network side position area. As shown in FIG. 8, the method includes the steps described below.

In a step 801, a source radio access network (RAN) node receives a fourth update request message sent by a peer RAN node, where identifier information of a user equipment (UE) is carried in the fourth update request message, and the UE is in an inactive state.

In a step 802, the source RAN node generates a second update acknowledgement message according to the fourth update request message, and sends the second update acknowledgement message to the peer RAN node for performing a position area update process by the peer RAN node.

Here, the source RAN node is a RAN node in which the UE resides before moving to the target RAN node. The mobility management anchor node of the UE may be changed or may not be changed. The peer RAN node is a target RAN node.

The fourth update request message is generated by the peer RAN node according to a received third update request message, and the third update request message is sent by the UE.

In the embodiment of the present invention, the identifier information of the UE includes one or more of:
identifier information allocated by the target RAN node to the UE for uniquely identifying the UE at an interface between RAN nodes;
position area information of a cell where the UE currently resides;
a UE identifier, such as an S-TMSI or UE text identifier information, which may uniquely identify the UE (user) text on the source side.

In the embodiment of the present invention, the third update request message includes one or more of:
information of a source RAN position area, such as a RAI;
a UE identifier, such as an S-TMSI or a user (UE) text identifier, which may uniquely identify the UE on the source RAN node; and
an update type: a periodic RAU or an event-triggered RAU;
anchor node information of the UE in the source RAN position area, such as an anchor node ID (which may also be information that can obtain the anchor node ID, or may also be parsed from a global cell identifier) and routing information (a TAI, a RAI or a source anchor node may be indexed on the RAN side or the CN side through information related to the user text), where the anchor node of the source RAN position area may be a RAN node in which the UE in the connected state finally resides; and
UE capability information, such as indication of whether the UE supports cross-RAN nodes text obtaining, or capability of supporting different services by the UE.

In an embodiment of the present invention, the second update acknowledgement message includes:
identifier information allocated by the source RAN node to the UE for uniquely identifying the UE at an interface between RAN nodes; and
identifier information allocated by the target RAN node to the UE for uniquely identifying the UE at an interface between the RAN nodes.

In another embodiment of the present invention, the second update acknowledgement message includes:
identifier information allocated by the source RAN node to the UE for uniquely identifying the UE at an interface between RAN nodes;
identifier information allocated by the target RAN node to the UE for uniquely identifying the UE at an interface between the RAN nodes; and
UE text information, including UE text information reserved by the UE on the source RAN node. In the embodiment of the present invention, after the source RAN node receives the fourth update request message, the method further includes the steps described below.

The source RAN node finds locally saved UE context information, and determines whether a mobility management anchor node of the UE needs to be replaced according to current position area information of the UE.

Here, in condition that the mobility management anchor node of the UE does not need to be replaced, the source RAN node may retain the RA update history of the UE in the inactive state. The RA update history may be used for reporting the subsequent paging optimization auxiliary information. If the mobility management anchor node of the UE needs to be replaced, for example, the source anchor node does not support the newly resided RAI of the UE, the anchor node needs to be replaced for the UE.

In the embodiment of the present invention, the RAN node is a base station, or a node formed by two separate units of a wireless central unit (CU) and a wireless distributed unit (DU).

In the embodiment of the present invention, when the RAN node is the node formed by two separate units of a CU and a DU, the step in which the source radio access network (RAN) node receives the fourth update request message sent by the peer RAN node, generates the second update acknowledgement message according to the fourth update request message, and sends the second update acknowledgement message to the peer RAN node includes the steps described below.

A source CU receives the fourth update request message.

The source CU generates the second update acknowledgement message according to the fourth update request message, and sends the second update acknowledgement message to a target CU. In the embodiment of the present invention, after the source CU sends the second update acknowledgement message, the method further includes the steps described below.

The source CU delivers a UE text resource release message to a source DU, for clearing a resource of the UE on the source DU. The UE text resource release message includes: identifier information for uniquely identifying the UE at a CU-DU interface, and a resource release cause. In the embodiment of the present invention, after the RAU update process, in condition that the UE has new downlink data to arrive at the source RAN node, the anchor node delivers a paging message (RAN-triggered paging) in the new RA position area. The paging message may be forwarded through an interface between RAN nodes, to improve the success probability of the user paging and reduce the paging range.

In condition that the UE needs to send uplink data, the UE self-triggers the traffic establishment request process and switches to the active state. When the active state is being switched to, the bearer path migration may be considered to be directly performed, to ensure that the subsequent data is sent on the shortest path.

The embodiment of the present invention may achieve network side position area information obtaining of the UE across RAN nodes in the scenario where the UE is moving across the RAN nodes, and achieve forwarding of cache data on the RAN node, to avoid UE resume failure and a defect of cache data forwarding failure due to movement or the UE, and the energy of the UE is saved. In addition, UE text information can be migrated to a new mobility management anchor node to improve network efficiency.

The embodiment of the present invention can satisfy user text information obtaining and data forwarding in the UE text resume process for NB-IoT users in the LTE system, smartphone users that support the user plane solution and users that support the inactive state in the control of the RAN side in the 5G system.

An embodiment of the present invention further provides a computer-readable storage medium configured to store computer-executable instructions which, when executed by a processor, execute the method for updating a network side position area as shown in FIG. 7.

An embodiment of the present invention further provides a computer-readable storage medium configured to store computer-executable instructions which, when executed by a processor, execute the method for updating a network side position area as shown in FIG. 8.

In the embodiment, the above-mentioned storage medium may further be configured to store steps for executing the methods in the embodiments of the present invention, and details will not be repeated here. In the embodiment, the storage medium may include, but is not limited to, a USB flash disk, a read-only memory (ROM), a random access memory (RAM), a mobile hard disk, a magnetic disk, an optical disk or another medium capable of storing the program codes.

The embodiments of the present invention further provide an apparatus and device for implementing the above-mentioned method embodiments. The following apparatus embodiments have similar description to the above-mentioned method embodiments, and have the same beneficial effects as the method embodiments, and thus repetition will not be made herein. The technical details not disclosed in the apparatus embodiments of the present invention may be understood by those skilled in the art with reference to the description of the method embodiments of the present invention. In order to save space, repetition will not be made herein.

A claimed embodiment of the present invention further provides an apparatus for updating a network side position area. As shown in FIG. 9, the apparatus includes a first receiving unit 901, a first sending unit 902 and a first processing unit 903.

The first receiving unit 901 is configured to receive a first update request message. The first update request message is sent by a user equipment (UE) in an inactive state.

The first sending unit 902 is configured to generate a second update request message according to the first update request message, and send the second update request message to a source RAN node. The second update request message carries identifier information of the UE.

The first processing unit 903 is configured to receive a first update acknowledgement message sent by the source RAN node, and perform a subsequent position area update process.

Here, the units in the apparatus may be located in the same RAN node, or may be located in different RAN nodes.

In the claimed embodiment of the present invention, the first update request message includes one or more of:
identifier information allocated by the target RAN node to the UE for uniquely identifying the UE at an interface between RAN nodes;
position area information of a cell where the UE currently resides; and a UE identifier, such as an S-TMSI or UE text identifier information, which may uniquely identify the UE (user) text on the source side.

In the embodiment of the present invention, the third update request message includes one or more of:
information of a source RAN position area, such as a RAI;
a UE identifier, such as an S-TMSI or a user (UE) text identifier, which may uniquely identify the UE on the source RAN node;
an update type: a periodic RAU or an event-triggered RAU;
anchor node information of the UE in the source RAN position area, such as an anchor node ID (which may also be information that can obtain the anchor node ID, or may also be parsed from a global cell identifier) and routing information (a TAI, a RAI or a source anchor node may be indexed on the RAN side or the CN side through information related to the user text), where the anchor node of the source RAN position area may be a RAN node in which the UE in the connected state finally resides; and
UE capability information, such as indication of whether the UE supports cross-RAN nodes text obtaining, or capability of supporting different services by the UE.

In the embodiment of the present invention, the identifier information of the UE includes one or more of:
identifier information allocated by the target RAN node to the UE for uniquely identifying the UE at an interface between RAN nodes;
position area information of a cell where the UE currently resides;
a UE identifier; and
UE text identifier information.

In an embodiment of the present invention, the first update acknowledgement message includes:
identifier information allocated by the source RAN node to the UE for uniquely identifying the UE at an interface between RAN nodes; and
identifier information allocated by the target RAN node to the UE for uniquely identifying the UE at an interface between the RAN nodes.

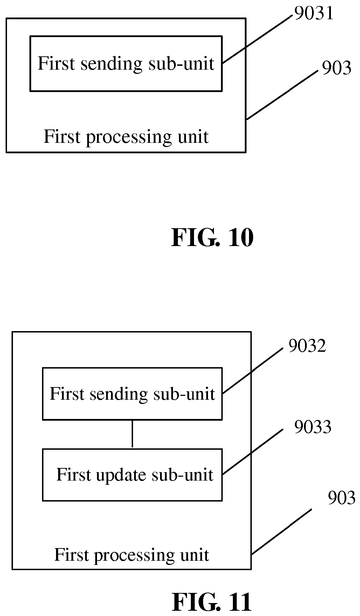

In another embodiment of the present invention, the first update acknowledgement message includes:
identifier information allocated by the source RAN node to the UE for uniquely identifying the UE at an interface between RAN nodes;
identifier information allocated by the target RAN node to the UE for uniquely identifying the UE at an interface between the RAN nodes; and
UE text information, including UE text information reserved by the UE on the source RAN node. In the embodiment of the present invention, as shown in FIG. 10, the first processing unit 903 further includes a first sending sub-unit 9031.

The first sending sub-unit 9031 is configured to deliver the first update acknowledgement message to the UE.

Or as shown in FIG. 11, the first processing unit 903 further includes a first sending sub-unit 9032 and a first update sub-unit 9033.

The first sending sub-unit 9032 is configured to deliver the first update acknowledgement message to the UE.

The first update sub-unit 9033 is configured to locally save UE text information in a target RAN node, update information of a RAN position area of the UE, and trigger a path switching process of an interface between the target RAN node and a core network (CN).

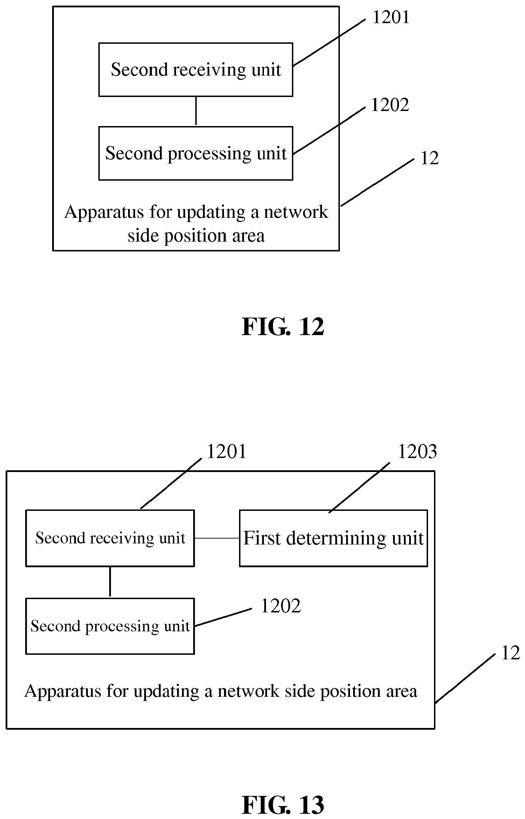

An embodiment of the present invention further provides an apparatus for updating a network side position area. As shown in FIG. 12, the apparatus includes a second receiving unit 1201 and a second processing unit 1202.

The second receiving unit 1201 is configured to receive a fourth update request message sent by a target RAN node. The fourth update request message carries identifier information of a user equipment (UE), and the UE is in an inactive state.

The second processing unit 1202 is configured to generate a second update acknowledgement message according to the fourth update request message, and send the second update acknowledgement message to the target RAN node for performing a position area update process by the target RAN node.

The fourth update request message is generated by the target RAN node according to a received third update request message, and the third update request message is sent by the UE.

Here, the units in the apparatus may be located in the same RAN node, or may be located in different RAN nodes.

In the embodiment of the present invention, the identifier information of the UE includes one or more of:
identifier information allocated by the target RAN node to the UE for uniquely identifying the UE at an interface between RAN nodes;
position area information of a cell where the UE currently resides;
a UE identifier; and
UE text identifier information.

In the embodiment of the present invention, the third update request message includes one or more of:
identifier information allocated by the target RAN node to the UE for uniquely identifying the UE at an interface between RAN nodes;
position area information of a cell where the UE currently resides;
a UE identifier, such as an S-TMSI; and
UE (user) text identifier information, which may uniquely identify the UE text on the source side.

In the embodiment of the present invention, the third update request message includes one or more of:
information of a source RAN position area, such as a RAI;
a UE identifier, such as an S-TMSI;
user (UE) text identifier, which may uniquely identify the UE on the source RAN node;
an update type: a periodic RAU or an event-triggered RAU;
anchor node information of the UE in the source RAN position area, such as an anchor node ID (which may also be information that can obtain the anchor node ID, or may also be parsed from a global cell identifier) and routing information (a TAI, a RAI or a source anchor node may be indexed on the RAN side or the CN side through information related to the user text), where the anchor node of the source RAN position area may be a RAN node in which the UE in the connected state finally resides; and
UE capability information, such as indication of whether the UE supports cross-RAN nodes text obtaining, or capability of supporting different services by the UE.

In an embodiment of the present invention, the second update acknowledgement message includes:
identifier information allocated by the source RAN node to the UE for uniquely identifying the UE at an interface between RAN nodes; and
identifier information allocated by the target RAN node to the UE for uniquely identifying the UE at an interface between the RAN nodes.

In another embodiment of the present invention, the second update acknowledgement message includes:
identifier information allocated by the source RAN node to the UE for uniquely identifying the UE at an interface between RAN nodes;
identifier information allocated by the target RAN node to the UE for uniquely identifying the UE at an interface between the RAN nodes; and
UE text information, including UE text information reserved by the UE on the source RAN node. In the embodiment of the present invention, as shown in FIG. 13, the apparatus further includes a first determining unit 1203.

The first determining unit 1203 is configured to find UE context information locally saved in the source RAN node after the second receiving unit 1201 receives the fourth update request message, and determine whether a mobility management anchor node of the UE needs to be replaced according to current position area information of the UE.

An embodiment of the present invention further provides a RAN node. The RAN node includes the apparatus for updating a network side position area shown in any one of FIGS. 9 to 11; or includes the apparatus for updating a network side position area shown in FIG. 12 or 13.

The embodiments of the present invention will be described below in detail in conjunction with implementation modes of scenarios.

In a scenario 1 of the embodiment, the mobility management anchor node is unchanged in the distributed network architecture.

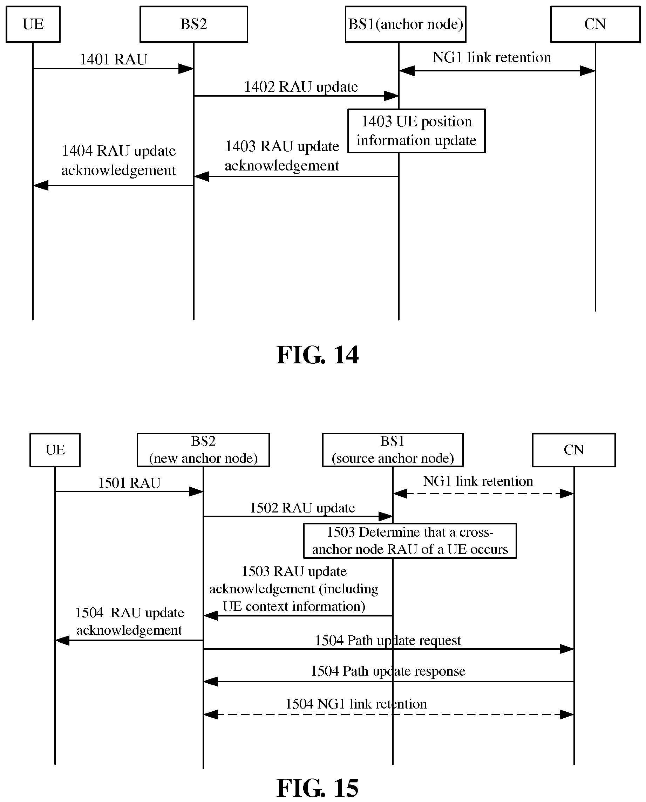

As shown in FIG. 14, the process includes the steps described below.

In a step 1401, a UE triggers an air interface resume request, and a request type is an RAU update.

The RAU update message carries one or more of:
information of a source RAN position area, such as a RAI;
a UE identifier, such as an S-TMSI or a user text identifier, which may uniquely identify the UE on the source side;
an update type: a periodic RAU or an event-triggered RAU;
anchor node information of the UE in the source position area, such as an anchor node ID (which may also be information that can obtain the anchor node ID, or may also be parsed from a global cell identifier) and routing information (a TAI, a RAI or a source anchor node may be indexed on the RAN side or the CN side through information related to the user text), where the anchor node of the source position area may be a base station in which the UE in the connected state finally resides; and
UE capability information, optionally, such as indication of whether the UE supports cross-base station text obtaining, or capability of supporting different services by the UE.

In a step 1402, after a new base station (target base station) receives a radio resource control (RRC) message, the new base station (target base station) sends an RAU update message to the source anchor node. The RAU update message carries one or more of:
identifier information allocated by the new base station to the UE for uniquely identifying the UE at an interface between base stations;
position area information of a cell where the UE currently resides; and
a UE identifier, such as an S-TMSI or UE text identifier information, which may uniquely identify the user text on the source side.

In a step 1403, after the source anchor node receives the RAU update message, the source anchor node finds the locally saved UE context, and determines whether the anchor node needs to be replaced according to the position area information currently reported by the UE.

Here it is assumed that the anchor node does not need to be replaced. At the same time, the anchor node may retain the RA update history of the UE in the inactive state. The RA update history may be used for reporting the subsequent paging optimization auxiliary information. The anchor node sends an RAU update acknowledgement message to the new base station. The RAU update acknowledgement message carries:
identifier information allocated by the source anchor node to the UE for uniquely identifying the UE at an interface between base stations; and
identifier information allocated by the new base station to the UE for uniquely identifying the UE at an interface between base stations.

In a step 1404, the new base station delivers the RAU update acknowledgement message to the UE. The UE continues to remain in the inactive state. In condition that the UE does not receive the RAU acknowledgment message, the RAU acknowledgment message is resent. In condition that the retransmission fails for several times, the idle state is switched to.

After the RAU update process, in condition that the UE has new downlink data to arrive at the anchor node, the anchor node delivers a paging message (RAN-triggered paging) in the new RA position area. The paging message may be forwarded through an interface between base stations, to improve the success probability of the user paging and reduce the paging range.

In condition that the UE needs to send uplink data, the UE self-triggers the traffic establishment request process and switches to the active state. When the active state is being switched to, the bearer path migration may be considered to be directly performed, to ensure that the subsequent data is sent on the shortest path.

The failure process is described below.

If the RAU update fails, an update failure message is returned to the new base station BS2, and the BS2 implements an air interface release of the UE on a common channel. The UE is switched into the idle state. At the same time, the NG1 interface between the source anchor node and the CN may not be released, waits for the subsequent keep-alive mechanism to trigger the UE text release process, notifies the CN to release the UE text, and implements a state change of the UE on the CN side.

In a scenario 2 of the embodiment, the mobility management anchor node is changed in the distributed network architecture.

As shown in FIG. 15, the process includes the steps described below.

In a step 1501, a UE triggers an air interface resume request, and the request type is the RAU update. The RAU update message carries one or more of:
information of a source RAN position area, such as a RAI;
a UE identifier, such as an S-TMSI or a user text identifier, which may uniquely identify the UE on the source side;
an update type: a periodic RAU or an event-triggered RAU;
anchor node information of the UE in the source position area, such as an anchor node ID (which may also be information that can obtain the anchor node ID, or may also be parsed from a global cell identifier) and routing information (a TAI, a RAI or a source anchor node may be indexed on the RAN side or the CN side through information related to the user text), where the anchor node of the source position area may be a base station in which the UE in the connected state finally resides; and
UE capability information, optionally, such as indication of whether the UE supports cross-base station text obtaining, or capability of supporting different services by the UE.

In a step 1502, after the new base station receives the RRC message, the new base station sends an RAU update message to the source anchor node. The RAU update message carries one or more of:
identifier information allocated by the new base station to the UE for uniquely identifying the UE at an interface between base stations;
position area information of a cell where the UE currently resides; and
a UE identifier, such as an S-TMSI or UE text identifier information, which may uniquely identify the user text on the source side.

In a step 1503, after the source anchor node receives the RAU update message, the source anchor node finds the locally saved UE context, and determines whether the anchor node needs to be replaced according to the RAI information currently reported by the UE.

For example, if the source anchor node does not support the newly resided RAI of the UE, the anchor node needs to be replaced for the UE. Here it is assumed that the anchor node needs to be replaced. The source anchor node sends an RAU update acknowledgement message to the new base station, and the text information of the UE is included. The RAU update acknowledgement message carries:
identifier information allocated by the source anchor node to the UE for uniquely identifying the UE at an interface between base stations;
identifier information allocated by the new base station to the UE for uniquely identifying the UE at an interface between base stations; and
UE text information, including UE text information reserved by the UE on the source anchor node. In a step 1504, after the user text migration is finished, the new base station, as a new anchor node, sends the RAU update acknowledgement message to the UE. The new anchor node locally saves the UE text information and updates the latest RAN side position information of the UE. At the same time, the path switching process of the interface between the RAN and the CN is triggered. For the CN, the UE performs switching in the connected state. The base station and the UE remain in the inactive state after the RAU process ends.

After the RAU update process, if the UE has new downlink data, the new downlink data is transmitted to the new anchor node. The new anchor node delivers a paging message in the new RA position area, to improve the success probability of the user paging and reduce the paging range.

If the UE needs to send uplink data, the UE self-triggers the traffic establishment request process and switches to the active state. When the active state is being switched to, the resume process is equivalent to be performed on the new anchor node, and the bearer path does not need to be migrated.

The failure process is described below.

If the RAU update fails, an update failure message is returned to the new anchor node, the source anchor node implements the air interface release of the UE on the common channel, and the UE switches to the idle state. At the same time, the interface between the source anchor node and the CN may not be released, waits for the subsequent keep-alive mechanism to trigger the UE text release process, notifies the MME to release the UE text, and implements a state update of the UE on the CN side.

If the path migration of the NG1 interface fails, the MME and the new anchor node release all resources, the air interface also triggers the RRC connection to be released, and the UE switches to the idle state.

In a scenario 3 of the embodiment, the mobility management anchor node is unchanged in the centralized network architecture.

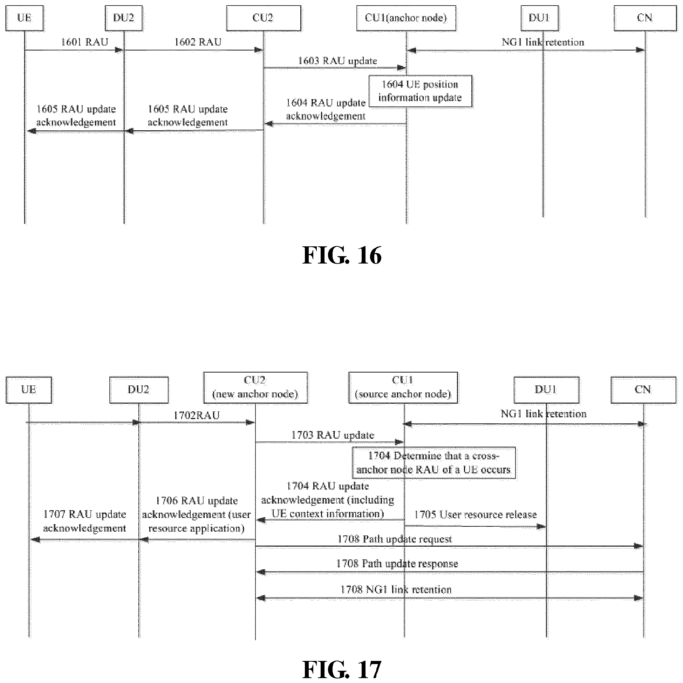

As shown in FIG. 16, the process includes the steps described below.

In a step 1601, a UE triggers an air interface resume request, and the request type is the RAU update. The RAU update message carries one or more of:
information of a source RAN position area, such as a RAI;
a UE identifier, such as an S-TMSI or a user text identifier, which may uniquely identify the UE on the source side;
an update type: a periodic RAU or an event-triggered RAU;
anchor node information of the UE in the source position area, such as an anchor node ID (which may also be information that can obtain the anchor node ID, or may also be parsed from a global cell identifier) and routing information (a TAI, a RAI or a source anchor node may be indexed on the RAN side or the CN side through information related to the user text), where the anchor node of the source position area may be a base station (CU) in which the UE in the connected state finally resides; and
UE capability information, optionally, such as indication of whether the UE supports cross-base station text obtaining, or capability of supporting different services by the UE.

In a step 1602, after a DU2 receives the RRC message, the DU2 sends an RAU update message to a CU2.

In a step 1603, the CU2 sends the RAU update message to a CU1. The RAU update message carries one or more of:
identifier information allocated by the CU2 to the UE for uniquely identifying the UE at an interface between CUs;
position area information of a cell where the UE currently resides; and
a UE identifier, such as an S-TMSI or UE text identifier information, which may uniquely identify the user text on the source side.

In a step 1604, after the CU1 receives the RAU update message, the source anchor node finds the locally saved UE context, and determines whether the anchor node needs to be replaced according to the position area information currently reported by the UE. Here it is assumed that the anchor node does not need to be replaced. At the same time, the CU1 may retain the RA update history of the UE in the inactive state. The RA update history may be used for reporting the subsequent paging optimization auxiliary information. The CU1 sends an RAU update acknowledgement message to the CU2. The RAU update acknowledgement message carries:
identifier information allocated by the CU1 to the UE for uniquely identifying the UE at an interface between CUs; and
identifier information allocated by the CU2 to the UE for uniquely identifying the UE at an interface between CUs.

In a step 1605, the CU2 delivers the RAU update acknowledgement message to the UE. The UE continues to remain in the inactive state. If the UE does not receive the RAU acknowledgment message, the RAU acknowledgment message is resent. If the retransmission fails for several times, the idle state is switched to.

After the RAU update process, if the UE has new downlink data to arrive at the anchor node CU1, the anchor node delivers a paging message (RAN-triggered paging) in the new RA position area. The paging message may be forwarded through an interface between CUs, to improve the success probability of the user paging and reduce the paging range.

If the UE needs to send uplink data, the UE self-triggers the traffic establishment request process and switches to the active state. When the active state is being switched to, the bearer path migration may be considered to be directly performed, to ensure that the subsequent data is sent on the shortest path.

The failure process is described below.

If the RAU update fails, an update failure message is returned to the CU2, and the DU2 implements an air interface release of the UE on a common channel. The UE is switched into the idle state. At the same time, the NG1 interface between the CU1 and the CN may not be released, waits for the subsequent keep-alive mechanism to trigger the UE text release process, notifies the CN to release the UE text, and implements a state change of the UE on the CN side.

In a scenario 4 of the embodiment, the mobility management anchor node is changed in the centralized network architecture.

As shown in FIG. 17, the process includes the steps described below.

In a step 1701, a UE triggers an air interface resume request, and a request type is an RAU update.

The RAU update message carries one or more of:
information of a source RAN position area, such as a RAI;
a UE identifier, such as an S-TMSI or a user text identifier, which may uniquely identify the UE on the source side;
an update type: a periodic RAU or an event-triggered RAU;
anchor node information of the UE in the source position area, such as an anchor node ID (which may also be information that can obtain the anchor node ID, or may also be parsed from a global cell identifier) and routing information (a TAI, a RAI or a source anchor node may be indexed on the RAN side or the CN side through information related to the user text), where the anchor node of the source position area may be a base station (CU) in which the UE in the connected state finally resides; and
UE capability information, optionally, such as indication of whether the UE supports cross-base station (CU) text obtaining, or capability of supporting different services by the UE.

In a step 1702, after a DU2 receives the RRC message, the DU2 sends an RAU update message to a CU2.

In a step 1703, the CU2 sends the RAU update message to the source anchor node CU1. The RAU update message carries one or more of:
identifier information allocated by the CU2 to the UE for uniquely identifying the UE at an interface between CUs.
position area information of a cell where the UE currently resides; and
a UE identifier, such as an S-TMSI or UE text identifier information, which may uniquely identify the user text on the source side.

In a step 1704, after the CU1 receives the RAU update message, the CU1 finds the locally saved UE context, and determines whether the anchor node for the UE needs to be replaced. For example, the RAI information currently reported by the UE is used to determine whether the anchor node needs to be replaced. If the source anchor node does not support the newly resided UE, the anchor point needs to be replaced for the UE. Here it is assumed that the anchor node needs to be replaced. The source anchor node CU1 sends an RAU update acknowledgement message to the CU2, and the text information of the UE is included. The RAU update acknowledgement message carries:
identifier information allocated by the CU1 to the UE for uniquely identifying the UE at an interface between CUs;
identifier information allocated by the CU2 to the UE for uniquely identifying the UE at an interface between CUs; and
UE text information, including UE text information reserved by the UE on the source anchor node CU1.

In a step 1705, the CU1 delivers a user text resource release message to the DU1 to clear the resource of the UE on the DU1. The UE text resource release message may include: identifier information for uniquely identifying the UE at a CU-DU interface, and a resource release cause. In a step 1706, after the user text migration is finished, the CU2, as a new anchor node, delivers the RAU update acknowledgement message to the DU2, and at the same time, the DU2 allocates resources for the user.

In a step 1707, the DU2 delivers the RAU update acknowledgement message to the UE. The CU2 locally saves the UE text information and updates the latest RAN side position information of the UE.

In a step 1708, the CU2 triggers the path switching process of the interface between the RAN and the CN. For the CN, the UE performs switching in the connected state. The CU and the UE remain in the inactive state after the RAU process ends.

After the RAU update process, if the UE has new downlink data, the new downlink data is transmitted to the new anchor node CU2. The new anchor node CU2 delivers a paging message in the new RA position area, to improve the success probability of the user paging and reduce the paging range.

If the UE needs to send uplink data, the UE self-triggers the traffic establishment request process and switches to the active state. When the active state is being switched to, the resume process is equivalent to be performed on the new anchor node CU2, and the bearer path between the RAN and the CN does not need to be migrated.

The failure process is described below.

If the RAU update fails, an update failure message is returned to the new anchor node CU2, the source anchor node CU1 implements the air interface release of the UE on the common channel, and the UE switches to the idle state. At the same time, the interface between the source anchor node CU1 and the CN may not be released, waits for the subsequent keep-alive mechanism to trigger the UE text release process, notifies the CN to release the UE text, and implements a state update of the UE on the CN side.

If the path migration of the interface between the RAN and the CN fails, the CN and the new anchor node CU2 release all resources, the air interface also triggers the RRC connection to be released, and the UE switches to the idle state.

### Scenario 5 of the embodiment

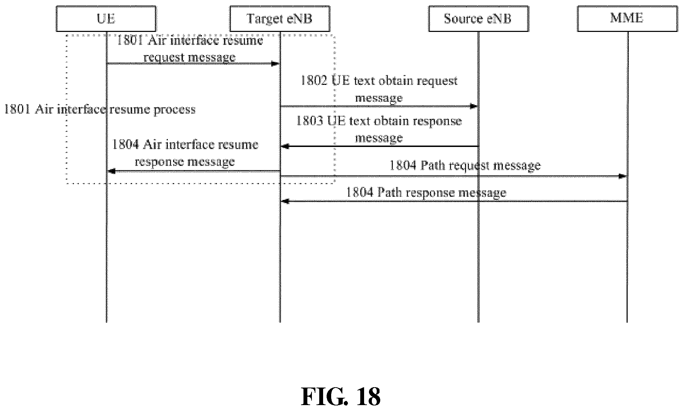

The scenario in the embodiment is a process supporting the above solutions and for obtaining and resuming user text information of a cross-site user in the LTE system. As shown in FIG. 18, the process includes the steps described below.

In a step 1801, a UE may move from a source base station to a target base station in a suspend state, and initiate a resume request at the target base station.

In a step 1802, after the target base station receives the resume request of the UE, the target base station sends a UE text obtain request to the source base station according to information carried in an air interface request message. The UE text obtain request message carries identifier information RESUME ID that uniquely identifies the UE text. The identifier is formed by source base station identification information and UE identification information, and is allocated by the source base station and notified to the UE when the UE is in the suspend state.

In a step 1803, if the source base station finds the text information of the UE locally, the source base station feeds back the text information of the UE to the target base station in a text obtain response message. Otherwise, a text obtain failure message is sent to the target base station.

In a step 1804, after the target base station obtains the text information of the UE, the target base station implements bearer path information update and UE text resume through the path request process.

It should be noted that the embodiments of the present invention is applicable to, but not limited to, 5G, eLTE, and LTE systems.

Although the implementation modes disclosed by the embodiments of the present invention are as described above, the content thereof is merely implementation modes for facilitating the understanding of the embodiments of the present invention and is not intended to limit the present application. The patent protection scope of the present application is still subject to the scope defined by the appended claims.

## Claims

1. A method for updating a network side position area, the method comprising:
receiving (701), by a target radio access network, RAN, node, a first update request message, wherein the first update request message is sent by a user equipment, UE, in an inactive state;
generating (702), by the target RAN node, a second update request message according to the first update request message, and sending the second update request message to a source RAN node, wherein identifier information of the UE is carried in the second update request message; and
receiving (703), by the target RAN node, a update acknowledgement message sent by the source RAN node, and performing a subsequent position area update process;
wherein the update acknowledgement message comprises:
identifier information allocated by the source RAN node to the UE for uniquely identifying the UE at an interface between RAN nodes; and
identifier information allocated by the target RAN node to the UE for uniquely identifying the UE at an interface between the RAN nodes.

2. The method for updating the network side position area of claim 1, wherein the first update request message comprises one or more of:
information of a source RAN position area;
a UE identifier;
a UE context identifier;
an update type;
anchor node information and routing information of the UE in the source RAN position area; and
UE capability information;
or, wherein the identifier information of the UE comprises one or more of:
identifier information allocated by the target RAN node to the UE for uniquely identifying the UE at an interface between RAN nodes;
position area information of a cell where the UE currently resides;
a UE identifier; and
UE context identifier information.

3. The method for updating the network side position area of claim 1, wherein the update acknowledgement message further comprises:
UE context information, comprising UE context information reserved by the UE on the source RAN node.

4. The method for updating the network side position area of claim 1, wherein a RAN node is a base station, or a node formed by two separate units of a wireless central unit, CU, and a wireless distributed unit, DU;
or, wherein when a RAN node is a node formed by two separate units of a central unit, CU, and a distributed unit, DU,
receiving, by the target RAN node, the first update request message, generating, according to the first update request message, the second update request message, and sending the second update request message to the source RAN node comprises:
receiving, by a target DU, the first update request message;
forwarding, by the target DU, the first update request message to a target CU; and
generating, by the target CU, the second update request message according to the first update request message, and sending the second update request message to a source CU.

5. The method for updating the network side position area of claim 1, wherein performing, by the target RAN node, the subsequent position area update process comprises:
delivering, by the target RAN node, the update acknowledgement message to the UE; or
delivering, by the target RAN node, the update acknowledgement message to the UE, saving UE context information locally, updating information of a RAN position area of the UE, and
triggering a path switching process of an interface between the target RAN node and a core network, CN.

6. The method for updating the network side position area of claim 1, wherein receiving, by the target RAN node, the update acknowledgement message sent by the source RAN node, and performing the subsequent position area update process comprises:
when a RAN node is a node formed by two separate units of a center unit, CU, and a distributed unit, DU, delivering, by a target CU, the update acknowledgement message to a target DU, saving UE context information locally, updating information of a RAN position area of the UE, and
triggering a path switching process of an interface between the target CU and a core network, CN;
and receiving, by the target DU, the update acknowledgement message, then allocating a resource to the UE, and delivering the update acknowledgement message to the UE.

7. A method for updating a network side position area, the method comprising:
receiving (801), by a source radio access network, RAN, node, a second update request message sent by a target RAN node, wherein identifier information of a user equipment, UE, is carried in the second update request message, and the UE is in an inactive state; and
generating (802), by the source RAN node, a update acknowledgement message according to the second update request message, and sending the update acknowledgement message to the target RAN node for performing a position area update process by the target RAN node;
wherein the second update request message is generated by the target RAN node according to a received first update request message, and the first update request message is sent by the UE;
wherein the update acknowledgement message comprises:
identifier information allocated by the source RAN node to the UE for uniquely identifying the UE at an interface between RAN nodes; and
identifier information allocated by the target RAN node to the UE for uniquely identifying the UE at an interface between the RAN nodes.

8. The method for updating the network side position area of claim 7, wherein the identifier information of the UE comprises one or more of:
identifier information allocated by the target RAN node to the UE for uniquely identifying the UE at an interface between RAN nodes;
position area information of a cell where the UE currently resides;
a UE identifier; and
UE context identifier information;
or, wherein the first update request message comprises one or more of:
information of a source RAN position area;
a UE identifier; and
a UE context identifier;
an update type;
anchor node information and routing information of the UE in the source RAN position area; and
UE capability information.

9. The method for updating the network side position area of claim 7, wherein the update acknowledgement message further comprises:
UE context information, comprising UE context information reserved by the UE on the source RAN node.

10. The method for updating the network side position area of claim 7, wherein after receiving, by the source RAN node, the second update request message, the method further comprises:
finding, by the source RAN node, locally saved UE context information, and determining, according to current position area information of the UE, whether a mobility management anchor node of the UE needs to be replaced.

11. The method for updating the network side position area of claim 7, wherein when a RAN node is a node formed by two separate units of a central unit, CU, and a distributed unit, DU, receiving, by the RAN node, the second update request message sent by the target RAN node, generating the update acknowledgement message according to the second update request message, and sending the update acknowledgement message to the target RAN node comprises:
receiving, by a source CU, the second update request message; and
generating, by the source CU, the update acknowledgement message according to the second update request message, and sending the update acknowledgement message to a target CU;
preferably, wherein after sending, by the source CU, the update acknowledgement message, the method further comprises:
delivering, by the source CU, a UE context resource release message to a source DU, for clearing a resource of the UE on the source DU, wherein the UE context resource release message comprises: identifier information for uniquely identifying the UE at a CU-DU interface, and a resource release cause.

12. A target radio access network, RAN, node apparatus for updating a network side position area, the target RAN node apparatus comprising:
a receiving unit (901), which is configured to receive a first update request message, wherein the first update request message is sent by a user equipment, UE, in an inactive state;
a sending unit (902), which is configured to generate a second update request message according to the first update request message, and send the second update request message to a source radio access network, RAN, node, wherein identifier information of the UE is carried in the second update request message; and
a processing unit (903), which is configured to receive a update acknowledgement message sent by the source RAN node, and perform a subsequent position area update process;
wherein the update acknowledgement message comprises:
identifier information allocated by the source RAN node to the UE for uniquely identifying the UE at an interface between RAN nodes; and
identifier information allocated by the target RAN node to the UE for uniquely identifying the UE at an interface between the RAN nodes.

13. A source radio access network, RAN, node apparatus for updating a network side position area, the source RAN node apparatus comprising:
a receiving unit (1201), which is configured to receive a second update request message sent by a target radio access network, RAN, node, wherein the second update request message carriers identifier information of a user equipment, UE, and the UE is in an inactive state; and
a processing unit (1202), which is configured to generate a update acknowledgement message according to the second update request message, and send the update acknowledgement message to the target RAN node for performing a position area update process by the target RAN node; wherein the second update request message is generated by the target RAN node according to a received first update request message, and the first update request message is sent by the UE; wherein the update acknowledgement message comprises:
identifier information allocated by the source RAN node to the UE for uniquely identifying the UE at an interface between RAN nodes; and
identifier information allocated by the target RAN node to the UE for uniquely identifying the UE at an interface between the RAN nodes.

14. A computer-readable storage medium, which is configured to store, on a target radio access network, RAN, node apparatus, computer-executable instructions for executing the method for updating a network side position area of any one of claims 1 to 6.

15. A computer-readable storage medium, which is configured to store, on a source radio access network, RAN, node apparatus, computer-executable instructions for executing the method for updating a network side position area of any one of claims 7 to 11.

## Patentansprüche

1. Verfahren zum Aktualisieren eines netzwerkseitigen Positionsbereichs, wobei das Verfahren Folgendes umfasst:
Empfangen (701) einer ersten Aktualisierungsanforderungsnachricht durch einen Funkzugriffsnetzwerk-, RAN-Zielknoten, wobei die erste Aktualisierungsanforderungsnachricht durch ein Benutzergerät (user equipment - UE) in einem inaktiven Zustand gesendet wird;
Erzeugen (702) einer zweiten Aktualisierungsanforderungsnachricht durch den RAN-Zielknoten gemäß der ersten Aktualisierungsanforderungsnachricht und Senden der zweiten Aktualisierungsanforderungsnachricht an einen RAN-Quellenknoten, wobei Kennungsinformationen des UE in der zweiten Aktualisierungsanforderungsnachricht getragen werden; und
Empfangen (703) einer Aktualisierungsbestätigungsnachricht, die durch den RAN-Quellenknoten gesendet wird, durch den RAN-Zielknoten, und Durchführen eines anschließenden Positionsbereichsaktualisierungsprozesses;
wobei die Aktualisierungsbestätigungsnachricht Folgendes umfasst:
Kennungsinformationen, die durch den RAN-Quellenknoten dem UE zugewiesen werden, um das UE an einer Schnittstelle zwischen RAN-Knoten eindeutig zu identifizieren; und
Kennungsinformationen, die durch den RAN-Zielknoten dem UE zugewiesen werden, um das UE an einer Schnittstelle zwischen den RAN-Knoten eindeutig zu identifizieren.

2. Verfahren zum Aktualisieren des netzwerkseitigen Positionsbereichs nach Anspruch 1, wobei die erste Aktualisierungsanforderungsnachricht eines oder mehrere des Folgenden umfasst:
Informationen über einen RAN-Quellenpositionsbereich;
eine UE-Kennung;
eine UE-Kontextkennung;
einen Aktualisierungstyp;
Ankerknoteninformationen und Weiterleitungsinformationen des UE in dem RAN-Quellenpositionsbereich; und
UE-Fähigkeitsinformationen;
oder wobei die Kennungsinformationen des UE eines oder mehrere des Folgenden umfassen:
Kennungsinformationen, die durch den RAN-Zielknoten dem UE zugewiesen werden, um das UE an einer Schnittstelle zwischen RAN-Knoten eindeutig zu identifizieren;
Positionsbereichsinformationen einer Zelle, in der sich das UE aktuell befindet;
eine UE-Kennung; und
UE-Kontextkennungsinformationen.

3. Verfahren zum Aktualisieren des netzwerkseitigen Positionsbereichs nach Anspruch 1, wobei die Aktualisierungsbestätigungsnachricht ferner Folgendes umfasst:
UE-Kontextinformationen, die UE-Kontextinformationen umfassen, die durch das UE an dem RAN-Quellenknoten reserviert werden.

4. Verfahren zum Aktualisieren des netzwerkseitigen Positionsbereichs nach Anspruch 1, wobei ein RAN-Knoten eine Basisstation oder ein Knoten ist, der durch zwei separate Einheiten einer drahtlosen zentralen Einheit (central unit - CU) und einer drahtlosen verteilten Einheit (distributed unit - DU) gebildet wird;
oder wobei, wenn ein RAN-Knoten ein Knoten ist, der durch zwei separate Einheiten einer zentralen Einheit, CU, und einer verteilten Einheit, DU, gebildet wird,
das Empfangen der ersten Aktualisierungsanforderungsnachricht durch den RAN-Zielknoten, das Erzeugen der zweiten Aktualisierungsanforderungsnachricht gemäß der ersten Aktualisierungsanforderungsnachricht und das Senden der zweiten Aktualisierungsanforderungsnachricht an den RAN-Quellenknoten Folgendes umfasst:
Empfangen der ersten Aktualisierungsanforderungsnachricht durch eine Ziel-DU;
Weiterleiten der ersten Aktualisierungsanforderungsnachricht an eine Ziel-CU durch die Ziel-DU; und
Erzeugen der zweiten Aktualisierungsanforderungsnachricht gemäß der ersten Aktualisierungsanforderungsnachricht durch die Ziel-CU und Senden der zweiten Aktualisierungsanforderungsnachricht an eine Quellen-CU.

5. Verfahren zum Aktualisieren des netzwerkseitigen Positionsbereichs nach Anspruch 1, wobei das Durchführen des anschließenden Positionsbereichsaktualisierungsprozesses durch den RAN-Zielknoten Folgendes umfasst:
Liefern der Aktualisierungsbestätigungsnachricht an das UE durch den RAN-Zielknoten; oder
Liefern der Aktualisierungsbestätigungsnachricht an das UE durch den RAN-Zielknoten, lokales Speichern von UE-Kontextinformationen, Aktualisieren von Informationen über einen RAN-Positionsbereich des UE und Auslösen eines Pfadumschaltprozesses einer Schnittstelle zwischen dem RAN-Zielknoten und einem Kernnetzwerk (core network - CN).

6. Verfahren zur Aktualisierung des netzwerkseitigen Positionsbereichs nach Anspruch 1, wobei das Empfangen der Aktualisierungsbestätigungsnachricht, die durch den RAN-Quellenknoten gesendet wird, durch den RAN-Zielknoten, und das Durchführen des anschließenden Positionsbereichsaktualisierungsprozesses Folgendes umfasst:
wenn ein RAN-Knoten ein Knoten ist, der durch zwei separate Einheiten einer zentralen Einheit, CU, und einer verteilten Einheit, DU, gebildet wird, Liefern der Aktualisierungsbestätigungsnachricht an eine Ziel-DU durch eine Ziel-CU, lokales Speichern von UE-Kontextinformationen, Aktualisieren von Informationen über einen RAN-Positionsbereich des UE und Auslösen eines Pfadumschaltprozesses einer Schnittstelle zwischen dem Ziel-CU und einem Kernnetzwerk, CN; und Empfangen der Aktualisierungsbestätigungsnachricht durch die Ziel-DU, dann Zuweisen einer Ressource an das UE und Liefern der Aktualisierungsbestätigungsnachricht an das UE.

7. Verfahren zum Aktualisieren eines netzwerkseitigen Positionsbereichs, wobei das Verfahren Folgendes umfasst:
Empfangen (801) einer zweiten Aktualisierungsanforderungsnachricht, die durch einen RAN-Zielknoten gesendet wird, durch einen Funkzugriffsnetzwerk-, RAN-Quellenknoten, wobei Kennungsinformationen eines Benutzergeräts, UE, in der zweiten Aktualisierungsanforderungsnachricht getragen werden, und das UE in einem inaktiven Zustand ist; und
Erzeugen (802) einer Aktualisierungsbestätigungsnachricht gemäß der zweiten Aktualisierungsanforderungsnachricht durch den RAN-Quellenknoten und Senden der Aktualisierungsbestätigungsnachricht an den RAN-Zielknoten, um einen Positionsbereichsaktualisierungsprozess durch den RAN-Zielknoten durchzuführen;
wobei die zweite Aktualisierungsanforderungsnachricht durch den RAN-Zielknoten gemäß einer empfangenen ersten Aktualisierungsanforderungsnachricht erzeugt wird, und die erste Aktualisierungsanforderungsnachricht durch das UE gesendet wird;
wobei die Aktualisierungsbestätigungsnachricht Folgendes umfasst:
Kennungsinformationen, die durch den RAN-Quellenknoten dem UE zugewiesen werden, um das UE an einer Schnittstelle zwischen RAN-Knoten eindeutig zu identifizieren; und
Kennungsinformationen, die durch den RAN-Zielknoten dem UE zugewiesen werden, um das UE an einer Schnittstelle zwischen den RAN-Knoten eindeutig zu identifizieren.

8. Verfahren zum Aktualisieren des netzwerkseitigen Positionsbereichs nach Anspruch 7, wobei die Kennungsinformationen des UE eines oder mehrere des Folgenden umfassen:
Kennungsinformationen, die durch den RAN-Zielknoten dem UE zugewiesen werden, um das UE an einer Schnittstelle zwischen RAN-Knoten eindeutig zu identifizieren;
Positionsbereichsinformationen einer Zelle, in der sich das UE aktuell befindet;
eine UE-Kennung; und
UE-Kontextkennungsinformationen;
oder wobei die erste Aktualisierungsanforderungsnachricht eines oder mehrere des Folgenden umfasst:
Informationen über einen RAN-Quellenpositionsbereich;
eine UE-Kennung; und
eine UE-Kontextkennung;
einen Aktualisierungstyp;
Ankerknoteninformationen und Weiterleitungsinformationen des UE in dem RAN-Quellenpositionsbereich; und
UE-Fähigkeitsinformationen.

9. Verfahren zum Aktualisieren des netzwerkseitigen Positionsbereichs nach Anspruch 7, wobei die Aktualisierungsbestätigungsnachricht ferner Folgendes umfasst:
UE-Kontextinformationen, die UE-Kontextinformationen umfassen, die durch das UE an dem RAN-Quellenknoten reserviert werden.

10. Verfahren zum Aktualisieren des netzwerkseitigen Positionsbereichs nach Anspruch 7, wobei nach dem Empfangen der zweiten Aktualisierungsanforderungsnachricht durch den RAN-Quellenknoten das Verfahren ferner Folgendes umfasst: Finden von lokal gespeicherten UE-Kontextinformationen durch den RAN-Quellenknoten und Bestimmen, ob ein Mobilitätsverwaltungsankerknoten des UE ausgetauscht werden muss, gemäß aktuellen Positionsbereichsinformationen des UE.

11. Verfahren zum Aktualisieren des netzwerkseitigen Positionsbereichs nach Anspruch 7, wobei, wenn ein RAN-Knoten ein Knoten ist, der durch zwei separate Einheiten einer zentralen Einheit, CU, und einer verteilten Einheit, DU, gebildet wird, das Empfangen der zweiten Aktualisierungsanforderungsnachricht, die durch den RAN-Zielknoten gesendet wird, durch den RAN-Knoten, das Erzeugen der Aktualisierungsbestätigungsnachricht gemäß der zweiten Aktualisierungsanforderungsnachricht und das Senden der Aktualisierungsbestätigungsnachricht an den RAN-Zielknoten Folgendes umfasst:
Empfangen der zweiten Aktualisierungsanforderungsnachricht durch eine Quellen-CU; und
Erzeugen der Aktualisierungsbestätigungsnachricht gemäß der zweiten Aktualisierungsanforderungsnachricht durch die Quellen-CU und Senden der Aktualisierungsbestätigungsnachricht an eine Ziel-CU; wobei vorzugsweise nach dem Senden der Aktualisierungsbestätigungsnachricht durch die Quellen-CU das Verfahren ferner Folgendes umfasst:
Liefern einer UE-Kontextressourcenfreigabenachricht an eine Quellen-DU durch die Quellen-CU zum Löschen einer Ressource des UE an der Quellen-DU, wobei die UE-Kontextressourcenfreigabenachricht Folgendes umfasst:
Kennungsinformationen zum eindeutigen Identifizieren des UE an einer CU-DU-Schnittstelle und eine Ressourcenfreigabeursache.

12. Funkzugriffsnetzwerk-, RAN-Zielknotenvorrichtung zur Aktualisierung eines netzwerkseitigen Positionsbereichs, wobei die RAN-Zielknotenvorrichtung Folgendes umfasst:
eine Empfangseinheit (901), die konfiguriert ist, um eine erste Aktualisierungsanforderungsnachricht zu empfangen, wobei die erste Aktualisierungsanforderungsnachricht durch ein Benutzergerät, UE, in einem inaktiven Zustand gesendet wird;
eine Sendeeinheit (902), die konfiguriert ist, um eine zweite Aktualisierungsanforderungsnachricht gemäß der ersten Aktualisierungsanforderungsnachricht zu erzeugen, und die zweite Aktualisierungsanforderungsnachricht an einen Funkzugriffsnetzwerk-, RAN-Quellenknoten zu senden, wobei Kennungsinformationen des UE in der zweiten Aktualisierungsanforderungsnachricht getragen werden; und
eine Verarbeitungseinheit (903), die konfiguriert ist, um eine Aktualisierungsbestätigungsnachricht zu empfangen, die durch den RAN-Quellenknoten gesendet wird, und einen anschließenden Positionsbereichsaktualisierungsprozess durchzuführen;
wobei die Aktualisierungsbestätigungsnachricht Folgendes umfasst:
Kennungsinformationen, die durch den RAN-Quellenknoten dem UE zugewiesen werden, um das UE an einer Schnittstelle zwischen RAN-Knoten eindeutig zu identifizieren; und
Kennungsinformationen, die durch den RAN-Zielknoten dem UE zugewiesen werden, um das UE an einer Schnittstelle zwischen den RAN-Knoten eindeutig zu identifizieren.

13. Funkzugriffsnetzwerk-, RAN-Quellenknotenvorrichtung zur Aktualisierung eines netzwerkseitigen Positionsbereichs, wobei die RAN-Quellenknotenvorrichtung Folgendes umfasst:
eine Empfangseinheit (1201), die konfiguriert ist, um eine zweite Aktualisierungsanforderungsnachricht zu empfangen, die durch einen Funkzugriffsnetzwerk-, RAN-Zielknoten gesendet wird, wobei die zweite Aktualisierungsanforderungsnachricht Kennungsinformationen eines Benutzergeräts, UE, trägt, und das UE in einem inaktiven Zustand ist; und
eine Verarbeitungseinheit (1202), die konfiguriert ist, um eine Aktualisierungsbestätigungsnachricht gemäß der zweiten Aktualisierungsanforderungsnachricht zu erzeugen und die Aktualisierungsbestätigungsnachricht an den RAN-Zielknoten zu senden, um einen Positionsbereichsaktualisierungsprozess durch den RAN-Zielknoten durchzuführen;
wobei die zweite Aktualisierungsanforderungsnachricht durch den RAN-Zielknoten gemäß einer empfangenen ersten Aktualisierungsanforderungsnachricht erzeugt wird und die erste Aktualisierungsanforderungsnachricht durch das UE gesendet wird;
wobei die Aktualisierungsbestätigungsnachricht Folgendes umfasst:
Kennungsinformationen, die durch den RAN-Quellenknoten dem UE zugewiesen werden, um das UE an einer Schnittstelle zwischen RAN-Knoten eindeutig zu identifizieren; und
Kennungsinformationen, die durch den RAN-Zielknoten dem UE zugewiesen werden, um das UE an einer Schnittstelle zwischen den RAN-Knoten eindeutig zu identifizieren.

14. Computerlesbares Speichermedium, das konfiguriert ist, um an einer Funkzugriffsnetzwerk-, RAN-Zielknotenvorrichtung computerausführbare Anweisungen zum Ausführen des Verfahrens zur Aktualisierung eines netzwerkseitigen Positionsbereichs nach einem der Ansprüche 1 bis 6 zu speichern.

15. Computerlesbares Speichermedium, das konfiguriert ist, um an einer Funkzugriffsnetzwerk-, RAN-Quellenknotenvorrichtung computerausführbare Anweisungen zum Ausführen des Verfahrens zur Aktualisierung eines netzwerkseitigen Positionsbereichs nach einem der Ansprüche 7 bis 11 zu speichern.

## Revendications

1. Procédé de mise à jour d'une zone de position côté réseau, le procédé comprenant :
la réception (701), par un nœud de réseau d'accès radio cible, RAN, d'un premier message de demande de mise à jour, dans lequel le premier message de demande de mise à jour est envoyé par un équipement utilisateur, UE, dans un état inactif ;
la génération (702), par le nœud RAN cible, d'un second message de demande de mise à jour selon le premier message de demande de mise à jour, et l'envoi du second message de demande de mise à jour à un nœud RAN source, dans lequel les informations d'identifiant de l'UE sont transportées dans le second message de demande de mise à jour ; et
la réception (703), par le nœud RAN cible, d'un message d'accusé de réception de mise à jour envoyé par le nœud RAN source, et l'exécution d'un processus de mise à jour de zone de position suivant ;
dans lequel le message d'accusé de réception de mise à jour comprend :
des informations d'identifiant attribuées par le nœud RAN source à l'UE pour identifier de manière unique l'UE au niveau d'une interface entre les nœuds RAN ; et
des informations d'identifiant attribuées par le nœud RAN cible à l'UE pour identifier de manière unique l'UE au niveau d'une interface entre les nœuds RAN.

2. Procédé de mise à jour de la zone de position côté réseau selon la revendication 1, dans lequel le premier message de demande de mise à jour comprend l'un ou plusieurs :
d'informations d'une zone de position RAN source ;
d'un identifiant d'UE ;
d'un identifiant de contexte d'UE ;
d'un type de mise à jour ;
d'informations de nœud d'ancrage et des informations de routage de l'UE dans la zone de position RAN source ; et
d'informations de capacité d'UE ;
ou, dans lequel les informations d'identifiant d'UE comprennent l'un ou plusieurs :
d'informations d'identifiant attribuées par le nœud RAN cible à l'UE pour identifier de manière unique l'UE au niveau d'une interface entre des nœuds RAN ;
d'informations de zone de position d'une cellule où réside actuellement l'UE ;
d'un identifiant d'UE ; et
d'informations d'identifiant de contexte d'UE.

3. Procédé de mise à jour de la zone de position côté réseau selon la revendication 1, dans lequel le message d'accusé de réception de mise à jour comprend en outre :
des informations de contexte d'UE, comprenant des informations de contexte d'UE réservées par l'UE sur le nœud RAN source.

4. Procédé de mise à jour de la zone de position côté réseau selon la revendication 1, dans lequel un nœud RAN est une station de base, ou un nœud formé par deux unités séparées d'une unité centrale, CU, sans fil, et d'une unité distribuée, DU, sans fil ;
ou, dans lequel, lorsqu'un nœud RAN est un nœud formé de deux unités séparées d'une unité centrale, CU, et d'une unité distribuée, DU,
la réception, par le nœud RAN cible, du premier message de demande de mise à jour, la génération, selon le premier message de demande de mise à jour, du second message de demande de mise à jour, et l'envoi du second message de demande de mise à jour au nœud RAN source, comprennent :
la réception, par une DU cible, du premier message de demande de mise à jour ;
la transmission, par la DU cible, du premier message de demande de mise à jour à une CU cible ; et
la génération, par la CU cible, du second message de demande de mise à jour selon le premier message de demande de mise à jour, et l'envoi du second message de demande de mise à jour à une CU source.

5. Procédé de mise à jour de la zone de position côté réseau selon la revendication 1, dans lequel l'exécution, par le nœud RAN cible, du processus de mise à jour de zone de position suivant comprend :
la délivrance, par le nœud RAN cible, du message d'accusé de réception de mise à jour à l'UE ; ou
la délivrance, par le nœud RAN cible, du message d'accusé de réception de mise à jour à l'UE, la sauvegarde des informations de contexte d'UE localement, la mise à jour des informations d'une zone de position RAN de l'UE, et le déclenchement d'un processus de commutation de chemin d'une interface entre le nœud RAN cible et un réseau central, CN.

6. Procédé de mise à jour de la zone de position côté réseau selon la revendication 1, dans lequel la réception, par le nœud RAN cible, du message d'accusé de réception de mise à jour envoyé par le nœud RAN source, et l'exécution du processus de mise à jour de zone de position suivant, comprennent :
lorsqu'un nœud RAN est un nœud formé de deux unités séparées d'une unité centrale, CU, et d'une unité distribuée, DU, la délivrance, par une CU cible, du message d'accusé de réception de mise à jour à une DU cible, la sauvegarde locale des informations de contexte d'UE, la mise à jour des informations d'une zone de position RAN de l'UE, et le déclenchement d'un processus de commutation de chemin d'une interface entre la CU cible et un réseau central, CN ; et la réception, par la DU cible, du message d'accusé de réception de mise à jour, puis l'attribution d'une ressource à l'UE, et la délivrance du message d'accusé de réception de mise à jour à l'UE.

7. Procédé de mise à jour d'une zone de position côté réseau, le procédé comprenant :
la réception (801), par un nœud de réseau d'accès radio source, RAN, d'un second message de demande de mise à jour envoyé par un nœud RAN cible, dans lequel les informations d'identifiant d'un équipement utilisateur, UE, sont transportées dans le second message de demande de mise à jour, et l'UE est dans un état inactif ; et
la génération (802), par le nœud RAN source, d'un message d'accusé de réception de mise à jour selon le second message de demande de mise à jour, et l'envoi du message d'accusé de réception de mise à jour au nœud RAN cible pour exécuter un processus de mise à jour de zone de position par le nœud RAN cible ;
dans lequel le second message de demande de mise à jour est généré par le nœud RAN cible selon un premier message de demande de mise à jour reçu, et le premier message de demande de mise à jour est envoyé par l'UE ;
dans lequel le message d'accusé de réception de mise à jour comprend :
des informations d'identifiant attribuées par le nœud RAN source à l'UE pour identifier de manière unique l'UE au niveau d'une interface entre les nœuds RAN ; et
des informations d'identifiant attribuées par le nœud RAN cible à l'UE pour identifier de manière unique l'UE au niveau d'une interface entre les nœuds RAN.

8. Procédé de mise à jour de la zone de position côté réseau selon la revendication 7, dans lequel les informations d'identifiant de l'UE comprennent l'un ou plusieurs :
d'informations d'identifiant attribuées par le nœud RAN cible à l'UE pour identifier de manière unique l'UE au niveau d'une interface entre les nœuds RAN ;
d'informations de zone de position d'une cellule où réside actuellement l'UE ;
d'un identifiant d'UE ; et
d' informations d'identifiant de contexte d'UE ;
ou, dans lequel le premier message de demande de mise à jour comprend l'un ou plusieurs :
d'informations d'une zone de position RAN source ;
d'un identifiant d'UE ; et
d'un identifiant de contexte d'UE ;
d'un type de mise à jour ;
d'informations de nœud d'ancrage et des informations de routage de l'UE dans la zone de position RAN source ; et
d' informations de capacité d'UE.

9. Procédé de mise à jour de la zone de position côté réseau selon la revendication 7, dans lequel le message d'accusé de réception de mise à jour comprend en outre :
des informations de contexte d'UE, comprenant des informations de contexte d'UE réservées par l'UE sur le nœud RAN source.

10. Procédé de mise à jour de la zone de position côté réseau selon la revendication 7, dans lequel, après réception, par le nœud RAN source, du second message de demande de mise à jour, le procédé comprend en outre : la découverte, par le nœud RAN source, d'informations de contexte d'UE sauvegardées localement, et le fait de déterminer, selon les informations de zone de position actuelle de l'UE, si un nœud d'ancrage de gestion de mobilité de l'UE doit être remplacé.

11. Procédé de mise à jour de la zone de position côté réseau selon la revendication 7, dans lequel, lorsqu'un nœud RAN est un nœud formé de deux unités séparées d'une unité centrale, CU, et d'une unité distribuée, DU, la réception, par le nœud RAN, du second message de demande de mise à jour envoyé par le nœud RAN cible, la génération du message d'accusé de réception de mise à jour selon le second message de demande de mise à jour, et l'envoi du message d'accusé de réception de mise à jour au nœud RAN cible comprennent :
la réception, par une CU source, du second message de demande de mise à jour ; et
la génération, par la CU source, du message d'accusé de réception de mise à jour selon le second message de demande de mise à jour, et l'envoi du message d'accusé de réception de mise à jour à une CU cible ; de préférence, dans lequel après l'envoi, par la CU source, du message d'accusé de réception de mise à jour, le procédé comprend en outre :
la délivrance, par la CU source, d'un message de libération de ressource de contexte d'UE à une DU source, pour effacer une ressource de l'UE sur la DU source, dans lequel le message de libération de ressource de contexte d'UE comprend : des informations d'identifiant pour identifier de manière unique l'UE au niveau d'une interface CU-DU et un motif de libération de ressource.

12. Appareil de nœud de réseau d'accès radio cible, RAN, pour mettre à jour une zone de position côté réseau, l'appareil de nœud RAN cible comprenant :
une unité de réception (901), qui est configurée pour recevoir un premier message de demande de mise à jour, dans lequel le premier message de demande de mise à jour est envoyé par un équipement utilisateur, UE, dans un état inactif ;
une unité d'envoi (902), qui est configurée pour générer un second message de demande de mise à jour selon le premier message de demande de mise à jour, et envoyer le second message de demande de mise à jour à un nœud de réseau d'accès radio source, RAN, dans lequel les informations d'identifiant d'UE sont transportées dans le second message de demande de mise à jour ; et
une unité de traitement (903), qui est configurée pour recevoir un message d'accusé de réception de mise à jour envoyé par le nœud RAN source, et exécuter un processus de mise à jour de zone de position suivant ;
dans lequel le message d'accusé de réception de mise à jour comprend :
des informations d'identifiant attribuées par le nœud RAN source à l'UE pour identifier de manière unique l'UE au niveau d'une interface entre les nœuds RAN ; et
des informations d'identifiant attribuées par le nœud RAN cible à l'UE pour identifier de manière unique l'UE au niveau d'une interface entre les nœuds RAN.

13. Appareil de nœud de réseau d'accès radio source, RAN, pour mettre à jour une zone de position côté réseau, l'appareil de nœud RAN source comprenant :
une unité de réception (1201), qui est configurée pour recevoir un second message de demande de mise à jour envoyé par un nœud de réseau d'accès radio cible, RAN, dans lequel le second message de demande de mise à jour transporte des informations d'identifiant d'un équipement utilisateur, UE, et l'UE est dans un état inactif ; et
une unité de traitement (1202), qui est configurée pour générer un message d'accusé de réception de mise à jour selon le second message de demande de mise à jour, et envoyer le message d'accusé de réception de mise à jour au nœud RAN cible pour exécuter un processus de mise à jour de zone de position par le nœud RAN cible ;
dans lequel le second message de demande de mise à jour est généré par le nœud RAN cible selon un premier message de demande de mise à jour reçu, et le premier message de demande de mise à jour est envoyé par l'UE ; dans lequel le message d'accusé de réception de mise à jour comprend :
des informations d'identifiant attribuées par le nœud RAN source à l'UE pour identifier de manière unique l'UE au niveau d'une interface entre les nœuds RAN ; et
des informations d'identifiant attribuées par le nœud RAN cible à l'UE pour identifier de manière unique l'UE au niveau d'une interface entre les nœuds RAN.

14. Support de stockage lisible par ordinateur, qui est configuré pour stocker, sur un appareil de nœud de réseau d'accès radio cible, RAN, des instructions exécutables par ordinateur pour exécuter le procédé de mise à jour d'une zone de position côté réseau selon l'une quelconque des revendications 1 à 6.

15. Support de stockage lisible par ordinateur, qui est configuré pour stocker, sur un appareil de nœud de réseau d'accès radio source, RAN, des instructions exécutables par ordinateur pour exécuter le procédé de mise à jour d'une zone de position côté réseau selon l'une quelconque des revendications 7 à 11.
